# EUROPÄISCHE PATENTSCHRIFT

(11) **EP 2 481 186 B1**
(45) Veröffentlichungstag und Bekanntmachung des Hinweises auf die Patenterteilung: **12.12.2018**
(21) Anmeldenummer: 10776569.5
(22) Anmeldetag: 26.10.2010
(51) Int. Cl.: H04L 12/24, H04L 29/08

(54) **VERWALTUNG VON ELEKTRONISCHEN GERÄTEN**
MANAGEMENT OF ELECTRONIC APPLIANCES
GESTION D'APPAREILS ÉLECTRONIQUES

(30) Priorität: 27.10.2009 DE 102009050830
(43) Veröffentlichungstag der Anmeldung: 01.08.2012
(73) Patentinhaber: Bizerba SE & Co. KG, 72336 Balingen (DE)
(72) Erfinder: SPEIDEL, Jan, 72131 Ofterdingen (DE); BIERHOFF, Bernd, 88639 Wald-Reischach (DE)
(74) Vertreter: Manitz Finsterwald Patentanwälte PartmbB
(86) Internationale Anmeldenummer: PCT/EP2010/006540
(87) Internationale Veröffentlichungsnummer: WO 2011/054463

(56) Entgegenhaltungen:
- US-A1- 2005 027 850
- US-A1- 2005 216 860
- BROWN R: "MAINTENANCE AND STATUS CONTROL ON THE GTD-5 EAX", GTE NETWORK SYSTEMS WORLD-WIDE COMMUNICATIONS JOURNAL, GTE NETWORK SYSTEMS. PHOENIX, US, vol. 21, no. 1, 1 January 1983 (1983-01-01), pages 31-36, XP000845164,
- P.A. Kacejko ET AL: "Object-Oriented Approach to the Enhancement of Energy Management Systems Software Engineering", ELECTRIC MACHINES AND POWER SYSTEMS., vol. 28, no. 2, 1 February 2000 (2000-02-01), pages 193-202, XP055302022, GB ISSN: 0731-356X, DOI: 10.1080/073135600268469
- "JavaOS? for Business? Version 2.0 Reference Manual passage", JAVAOS? FOR BUSINESS? VERSION 2.0 REFERENCE MANUAL,, vol. Version 2.0, 1 June 1998 (1998-06-01) , pages 1-310, XP007908578,

## Beschreibung

Die vorliegende Erfindung handelt von einem Verfahren betreffend den Betrieb von elektronischen Geräten.

Üblicherweise sind in einer Filiale eines Einzelhandelsunternehmens mehrere selbständige elektronische Geräte wie beispielsweise Ladenwaagen, Kassen und/oder Preisauszeichnungssysteme vorhanden.

DE 202 20 490 U1 beschreibt Büromaschinen, denen Computereinheiten zugeordnet sind, die an ein Computernetz angeschlossen sind. Service-Computersysteme können über die Computereinheiten auf interne Daten der Büromaschinen zugreifen, so dass ein Auslesen und/oder ein Setzen der internen Daten der Büromaschinen möglich ist.

Das Dokument US 2005/0027850 A1 betrifft die Verwaltung eines Computernetzwerks. Die Verwaltung basiert auf dem Protokoll SNMP, gemäß dem auf den verwalteten Netzwerkgeräten Agenten (Softwaremodule) laufen, die jeweils direkt mit einer Administratoranwendung kommunizieren. Offensichtlich können hierdurch Statusinformationen von den Netzwerkgeräten abgefragt und Konfigurationsparameter in den Netzwerkgeräten gesetzt werden. Die Netzwerkgeräte sind dabei nicht hierarchisch geordnet, sondern befinden sich alle auf derselben Ebene. Ein Netzwerkgerät kann lediglich eine MIB (Management Information Base) aufweisen, in der die abzufragenden Informationen oder zu setzenden Konfigurationsparameter hinterlegt und in Form einer Baumstruktur organisiert sind. Durch einen CIM (Common Information Model)-Objektmanager werden die (aufgrund ihrer Baumstruktur komplexen) MIBs in (weniger komplexe, keine Baumstruktur aufweisende) CIM-Objekte umgewandelt.

R. Brown, "Maintenance and Status Control on the GTD-5 EAX", GTE Automatic Electric World-Wide Communications Journal, Volume 21, No. 1, 31-36, 1983, beschreibt eine Vermittlungsstelle zur Vermittlung von Telefongesprächen. Gemäß dem Abstract der D3 ist ein Kontrollsystem zur Wartung der Hardware vorgesehen, das mittels eines generalisierten Software-Kontrollsystems entsprechende Wartungs-Aktivitäten durchführt und verwaltet. Das Kontrollsystem managt alle konfigurierbaren Hardware-Einheiten der Vermittlungsstelle mittels einer Datenbank hierarchisch abhängiger Beziehungen. P.A. Pacejko et al., "Object-oriented Approach to the Enhancement of Energy Management Systems Software Engineering", Electric Machines & Power Systems, Volume 28, No. 2, 193-202, 2000, beschreibt ein objektorientiert programmiertes Energiemanagementsystem. In "JavaOS for Business", Version 2.0, Reference Manual, June 1998, ist eine objektorientierte Programmiersprache beschrieben.

Aufgabe der vorliegenden Erfindung ist es, eine Möglichkeit anzugeben, kostengünstig einen störungsfreien bestimmungsgemäßen Betrieb der Geräte zu ermöglichen.

Diese Aufgabe wird durch ein Verfahren mit den Merkmalen des unabhängigen Anspruchs 1 gelöst, und insbesondere durch ein Verfahren betreffend den Betrieb von insbesondere in einem Netzwerk mit einer zentralen Stelle vernetzten selbständigen elektronischen Geräten eines Einzelhandelsunternehmens, nämlich Ladenwaagen, wobei an der zentralen Stelle eine die Einzelhandelsunternehmensstruktur repräsentierende Datenstruktur für ein Verwaltungsprogramm hinterlegt ist, die mehrere hierarchische Ebenen aufweist und in der die Geräte als Datenelemente erfasst sind, wobei die Geräte auf der Grundlage der Datenstruktur auch überwacht, konfiguriert und/oder angesteuert werden.

Bei dem Verwaltungsprogramm handelt es sich bevorzugt um ein Warenwirtschaftssystem, das beispielsweise aus einer Vielzahl von Software-Modulen zusammengesetzt ist, und mit dem der Warenfluss eines Einzelhandelsunternehmens vom Wareneingang, dem Abverkauf bis zum Versand betriebswirtschaftlich erfasst werden kann.

Die Geräte können z.B. direkt, per Ethernet, per DFÜ oder per Funk (sofern sich die vernetzten Geräte innerhalb einer einzigen Filiale befinden) oder per Internet (sofern sich die vernetzten Geräte auf mehrere Filialen verteilen) an das Warenwirtschaftssystem angebunden werden und von diesem auf einer Datenbank gespeicherte Informationen wie Preise und Warenbestand beziehen. Ferner senden die Geräte Daten, insbesondere Verkaufsdaten, an das Warenwirtschaftssystem, welches dann eine betriebswirtschaftliche bzw. statistische Auswertung der Daten vornimmt. Durch den Einsatz eines Warenwirtschaftssystems sind damit betriebswirtschaftliche Informationen jederzeit verfügbar.

In dem Verwaltungsprogramm ist die Unternehmensstruktur bzw. Filialstruktur als Datenstruktur abgebildet, in der die einzelnen Geräte des Netzwerks als Datenelemente erfasst sind. Bevorzugt umfassen die Datenelemente jeweils eine IP-Adresse des jeweiligen angeschlossenen Geräts oder einen Zeiger hierauf. Damit kann das Verwaltungsprogramm nicht nur Daten von den Geräten empfangen, sondern auch Daten aktiv an die Geräte senden. Die Datenstruktur ist bevorzugt nach Art einer Verzeichnisstruktur aufgebaut, insbesondere einer Baumstruktur, in der das Unternehmen bzw. die Gesellschaft vorzugsweise nach Ländern, Regionen (in dem jeweiligen Land), Filialen (in der jeweiligen Region), Abteilungen (in der jeweiligen Filiale) und/oder Geräten (in der jeweiligen Abteilung) hierarchisch gegliedert ist. Beispielsweise können mehrere Geräte einer Abteilung zugeordnet sein. Die Abteilung stellt dann einen Knoten der Datenstruktur für die der Abteilung zugeordneten Geräte dar. Über die Abteilung ist ein Gerät auch jeweils einer Filiale, einer Region und einem Land zugeordnet. Insbesondere sind die Länder, Regionen, Filialen, Abteilungen und/oder Geräte auf verschiedenen Ebenen der Datenstruktur angeordnet.

Erfindungsgemäß kann das grundsätzlich bekannte Verwaltungsprogramm also um eine Datenstruktur erweitert werden, die bevorzugt mehrere hierarchische Ebenen aufweist, wobei bevorzugt die Geräte in der untersten Ebene der Datenstruktur erfasst sind. Bei den Länder, Regionen, Filialen, Abteilungen und/oder Geräte handelt es sich dann um jeweilige Ebeneneinträge. Bevorzugt weist die Datenstruktur wenigstens zwei, insbesondere wenigstens drei, wenigstens vier oder wenigstens fünf, Hierarchieebenen auf.

Das Verwaltungsprogramm kann mehrere vorgegebene bzw. vorgefertigte Strukturkomponenten aufweisen, insbesondere fertig konfigurierte Module, z.B. eine Käseabteilung, eine Wurstabteilung, ein Filialabbild und/oder ein Ländertemplate, wobei die Strukturkomponenten jeweils für einen Ebeneneintrag der Datenstruktur, insbesondere einschließlich dem jeweiligen Ebeneneintrag zugeordnete Ebeneneinträge untergeordneter Hierarchieebenen, vorgesehen sind. Die Strukturkomponenten können dann derart miteinander verbunden werden, dass die hierarchische Datenstruktur entsteht. Bei einer Baumstruktur wird zu jeder Strukturkomponente eine Adresse der nächst tieferen und/oder nächst höheren Strukturkomponente oder ein Zeiger hierauf gespeichert.

Vorzugsweise ist die Datenstruktur softwarebasiert. Insbesondere wird die Datenstruktur mit einer Anwendungssoftware, insbesondere einem Software-Strukturassistenten, erzeugt und/oder ist die Datenstruktur bevorzugt variabel programmierbar. Es kann also eine Anwendungssoftware vorgesehen sein, die dazu ausgebildet ist, die Datenstruktur zu erzeugen. Bevorzugt ist die Datenstruktur nach Anlegen, insbesondere mit der Anwendungssoftware und/oder beschränkt, änderbar.

Die Struktur des in der DE 202 20 490 U1 beschriebenen Systems hingegen ist durch die Hardware-Struktur fest vorgegeben. Das dort beschriebene System besitzt, insbesondere innerhalb eines jeweiligen Netzwerks, keine mehrstufige Hierarchie. Insbesondere ist dem jeweiligen Service-Computersystem keine derartige Hierarchie bekannt. Es liegt lediglich genau eine Hierarchieebene vor. Insbesondere wird für jede Gruppe von Geräten ein eigenes Netzwerk benötigt.

Bevorzugt werden beim Anlegen der Datenstruktur die Ebenen, insbesondere deren Art, Anzahl und/oder Verknüpfung untereinander, festgelegt (insbesondere Unternehmen bzw. Konzern, Land, Ländergesellschaft bzw. Region, Filiale, Abteilung und/oder Gerät), insbesondere durch z.B. manuelle Eingabe von Parametern z.B. in ein Template. Beispielsweise können in einem Land auch nur Filialen und keine Ländergesellschaften festgelegt werden. Bevorzugt ist die Festlegung unveränderbar bzw. die angelegte Grundstruktur bleibt zukünftig unverändert bestehen.

Vorzugsweise können nach Anlegen der Datenstruktur aber innerhalb einer Hierarchieebene noch Änderungen vorgenommen werden, insbesondere vorhandene Ebeneneinträge verändert und/oder gelöscht und/oder neue Ebeneneinträge hinzugenommen werden. Insbesondere können die Änderungen über Profile vorgenommen werden bzw. Daten über Profile eingegeben werden. Profile können Eingabemasken sein, die mehrmals aufgerufen werden können, um Datenpflege zu betreiben. Einzugebende Daten sind z.B. Adressen von Mitarbeitern oder Kontaktpersonen, Warentexte und Namen der Waren in den Abteilungen.

Bei der zentralen Stelle kann es sich beispielsweise um eine Zentrale des Unternehmens oder um einen zentralen Server in einer Filiale handeln. Die Zuordnung des jeweiligen Geräts (beispielsweise Wurstwaage) zu der jeweiligen Abteilung (beispielsweise Fleisch- und Wurstabteilung) kann an der zentralen Stelle durch das Verwaltungsprogramm erfolgen, oder an dem jeweiligen Gerät. Bevorzugt weist die zentrale Stelle eine insbesondere abgesicherte Schnittstelle zu einem externen Service-Netzwerk auf. Von dem externen Service-Netzwerk aus kann dann beispielsweise eine Reparatur oder Wartung der vernetzten Geräte durchgeführt werden.

Erfindungsgemäß wurde erkannt, dass die für das Verwaltungsprogramm ohnehin geschaffene Datenstruktur nicht nur für betriebswirtschaftliche Zwecke verwendet werden kann, sondern auch zur Überwachung, Konfigurierung und/oder Ansteuerung der Geräte eines Einzelhandelsunternehmens, insbesondere der Geräte einer oder verschiedener Filialen eines Einzelhandelsunternehmens. Letztlich können hierdurch die Geräte gewissermaßen zusätzlich auch technisch verwaltet werden bzw. es kann auch auf den technischen Betrieb der Geräte Einfluss genommen werden.

Bevorzugt ist an der zentralen Stelle jedem Gerät bzw. jedem Datenelement ein Datensatz zugeordnet, der Softwaredaten, Hardwaredaten und/oder die Konfiguration des Geräts umfasst. Die Konfiguration der Geräte umfasst insbesondere auch das Layout einer Bedienoberfläche eines Touchscreens eines Geräts oder das Druckbild eines Bon- oder Etikettenausdrucks. Bevorzugt handelt es sich bei den angeschlossenen Geräten um softwarekonfigurierbare Geräte, d.h. um Geräte, deren Konfiguration durch Konfigurationsdateien festgelegt wird. Die Konfiguration der Geräte, z.B. das Design oder Layout der Bedienoberfläche oder die Bedienersprache der Geräte, kann dann durch Austausch der Konfigurationsdateien geändert werden.

Bevorzugt ist der zentralen Stelle bzw. dem Verwaltungsprogramm der aktuelle Softwarestand der Geräte ständig bekannt, insbesondere aus den vorgenannten Datensätzen. Daher kann die Software der Geräte in Abhängigkeit von an der zentralen Stelle hinterlegten Softwaredaten der Geräte aktualisiert werden. Ein Software-Update kann daher von zentral und für alle betroffenen Geräte im Wesentlichen gleichzeitig durchgeführt werden.

Außerdem ist es bevorzugt, wenn an der zentralen Stelle die Betriebszustände der Geräte (z.B. "o.k.", "defekt", "teildefekt"), insbesondere anhand von Meldungen der Geräte, überwacht werden.

Insbesondere hierdurch wird ermöglicht, dass von der zentralen Stelle aus eine Fernwartung der Geräte durchgeführt wird, ggf. vorbeugend, d.h. noch bevor ein Fehler an dem jeweiligen Gerät tatsächlich auftritt. Darüber hinaus kann auch ein präventiver Service durchgeführt werden, beispielsweise anhand von Meldungen wie "Druckkopf verschlissen", "fehlerhafter Festplattensektor", "wenig Papier/Etiketten".

Darüber hinaus können Betriebszustände der Geräte optisch dargestellt werden. Beispielsweise kann eine optische Statusanzeige der Soll/Ist-Abweichung von Parametern der Geräte vorgesehen sein, z.B. in Form einer Ampel oder eines Fortschrittsbalkens zu dem jeweiligen Gerät und bevorzugt zusätzlich zu zugeordneten Knoten übergeordneter Ebenen in der vorgenannten Verzeichnisstruktur. So kann beispielsweise die Funktionsbereitschaft der Geräte oder die erfolgreiche Durchführung eines Updates angezeigt werden.

Nach einer Ausführungsform der Erfindung ist an der zentralen Stelle wenigstens ein Geräteprofil mit einer erstellten Gerätekonfiguration hinterlegt, wobei das Geräteprofil mit mehreren Geräten verknüpft ist, um die Konfiguration der verknüpften Geräte gemäß der erstellten Gerätekonfiguration einzustellen, und wobei bei Änderung der erstellten Gerätekonfiguration die Konfigurationen der verknüpften Geräte entsprechend geändert werden. Insbesondere können das oder die Geräteprofile jeweils zumindest Teil der vorgenannten Datensätze sein und/oder die vorgenannten Softwaredaten, Hardwaredaten und/oder die Konfiguration des Geräts umfassen. Mit der Änderung der Gerätekonfiguration werden auch die Datensätze entsprechend geändert.

Bevorzugt sind mehrere Geräteprofile mit voneinander verschiedenen erstellten Gerätekonfigurationen vorgesehen, wobei die erstellten Gerätekonfigurationen jeweils als Konfigurationsdatei ausgebildet sind, und wobei die Konfigurationsdateien voneinander verschieden sind. Beispielsweise kann eine Waage mittels einer ersten Konfigurationsdatei als Wurstwaage, mittels einer zweiten Konfigurationsdatei als Käsewaage und mittels einer dritten Konfigurationsdatei als Obstwaage konfiguriert werden.

Insbesondere werden die Geräte basierend auf jeweils wenigstens einer Konfigurationsdatei betrieben, wobei die Konfigurationsdatei austauschbar ist.

Vorzugsweise weist das Verwaltungsprogramm einen Filter auf, der eine Auswahl einer Konfigurationsdatei aus zu einem jeweiligen Gerät passenden Konfigurationsdateien ermöglicht. Die ausgewählte Konfigurationsdatei kann dann an das jeweilige Gerät versendet werden. Die Auswahl kann an der zentralen Stelle erfolgen oder von dem jeweiligen Gerät aus initiiert werden, indem das jeweilige Gerät eine neue Konfiguration bei der zentralen Stelle anfordert, z.B. im Falle einer Reparatur oder Re- bzw. Neuinstallation.

Die Gerätekonfiguration bzw. Konfigurationsdatei kann zentral durch das Verwaltungsprogramm geändert werden. Bei einer neuen oder geänderten Konfiguration kann diese dann automatisch von dem Verwaltungsprogramm an die verknüpften Geräte übermittelt werden. Alternativ kann die erstellte Gerätekonfiguration, bevorzugt per Fernsteuerung von der zentralen Stelle aus, in einem der verknüpften Geräte geändert werden, wobei die an der zentralen Stelle vorliegende erstellte Gerätekonfiguration entsprechend der Änderung in dem verknüpften Gerät geändert wird, und wobei die geänderte Gerätekonfiguration an die übrigen verknüpften Geräte übermittelt wird.

Nach einer anderen Ausführungsform der Erfindung ist an der zentralen Stelle wenigstens eine Standard-Konfiguration bzw. -Konfigurationsdatei und/oder Standard-Software hinterlegt, insbesondere auf einer Datenbank des Verwaltungsprogramms, wobei bei erstmaligem Anschluss eines Geräts an den Geräteverbund und/oder bei Wechsel der Bestimmung des Geräts das Gerät eine zugeordnete Standard-Konfiguration und/oder Standard-Software automatisch herunterlädt, insbesondere per Plug and Play. Dies ist insbesondere dann von Vorteil, wenn die Konfiguration umfangreich und eine manuelle Erstellung zeitaufwendig ist. Beispielsweise kann eine Ladenwaage als Wurst-Waage oder als Käse-Waage konfiguriert sein.

Bevorzugt wird bei erstmaligem Anschluss eines Geräts an den Geräteverbund das Gerät in die Datenstruktur aufgenommen. Bevorzugt wird der Anschluss wie folgt durchgeführt: Das anzuschließende Gerät meldet sich mit seiner eigenen IP-Adresse bei der zentralen Stelle. Hierzu muss dem anzuschließenden Gerät auch die IP-Adresse der zentralen Stelle bekannt sein. Danach wird von der zentralen Stelle die Datenstruktur an das anzuschließende Gerät übermittelt. Dort kann dann ausgewählt werden, an welcher Stelle in der Datenstruktur (Gesellschaft, Land, Region, Filiale, Abteilung) das anzuschließende Gerät eingeordnet werden soll. Gleichzeitig kann bevorzugt auch ein Geräteprofil für das anzuschließende Gerät ausgewählt werden. Anschließend wird die getroffene Auswahl an die zentrale Stelle übermittelt, so dass das anzuschließende Gerät in die Datenstruktur aufgenommen werden kann. Durch die Aufnahme des Geräts in die Datenstruktur kann das Gerät bei einer zukünftigen Überwachung, Konfiguration und/oder Ansteuerung berücksichtigt werden.

Bevorzugt ist jedem Gerät eine das jeweilige Gerät kennzeichnende Geräte-ID zugeordnet. In dem Verwaltungsprogramm kann eine Referenz-Liste oder -Tabelle hinterlegt sein, anhand der durch einen Vergleich mit der Geräte-ID eines anzuschließenden Geräts bestimmt werden kann, ob das Gerät zum Betrieb in dem Geräteverbund zugelassen ist. Wird festgestellt, dass ein anzuschließendes Gerät nicht für den Betrieb in dem Geräteverbund zugelassen ist, kann dies angezeigt werden und es kann eine Kommunikation mit dem jeweiligen Gerät unterbunden werden. Insbesondere wird dem jeweiligen Gerät dann auch die Datenstruktur nicht übermittelt. Bevorzugt werden neu anzuschließende Geräte also erst nach einer Freigabe in den Netzverbund aufgenommen. Hierdurch kann die Manipulationssicherheit im Netzwerk erhöht werden. Zusätzlich können auch die Geräte-IDs der angeschlossenen Geräte in der Referenz-Liste oder -Tabelle eingetragen sein.

Nach einer weiteren Ausführungsform der Erfindung ist bei der Konfiguration eines Geräts die Anzahl der auswählbaren Einstellungen gegenüber der Anzahl der grundsätzlich verfügbaren Einstellungen in Abhängigkeit von der Hardware des Geräts reduziert. Bevorzugt sind dabei nur solche Einstellungen auswählbar, die mit der Hardware des Geräts kompatibel sind. Dies ist deshalb von Vorteil, da manche Konfigurationen für bestimmte Geräte-Hardware-Ausführung überhaupt keinen Sinn machen. Beispielsweise macht für ein Gerät mit alphanumerischem Display eine Konfiguration, mit der Multimedia-Inhalte dargestellt werden können, keinen Sinn. Hierdurch werden die Funktionssicherheit und die Bedienerfreundlichkeit erhöht.

Vorzugsweise werden digitale Dateninhalte in Abhängigkeit von Knoten übergeordneter Ebenen der Datenstruktur, denen die Geräte zugeordnet sind, oder in Abhängigkeit von der Hardware der Geräte von der zentralen Stelle an die Geräte übermittelt. Beispielsweise ermöglicht die Unterteilung in Länder, Regionen, Filialen eine gezielte und automatische Ansteuerung der Geräte, insbesondere in zeitlicher oder regionaler Hinsicht, um digitale Werbeinhalten zu verteilen, die an Bildschirmen der jeweiligen Geräte dargestellt werden sollen. Darüber hinaus kann in Kenntnis der Hardware der Geräte beispielsweise vermieden werden, an ein Gerät mit alphanumerischem Display oder zu geringer Rechenkapazität Multimedia-Inhalte zu senden, die von einem derartigen Gerät ohnehin nicht verarbeitbar sind. Insbesondere können anhand der vorgenannten Geräteprofile und/oder einer mit hierarchischen Ebenen ausgebildeten Datenstruktur, wodurch Pfade von der obersten Ebene bis zu den einzelnen Datenelementen ausgebildet sind, einzelne oder mehrere Geräte einzeln oder in Gruppen angesprochen werden, z.B. um die vorgenannten Multimedia-Inhalte oder neue Geräteprofile zu versenden. Beispielsweise können aufgrund eines hierarchischen Aufbaus durch Ansprechen einer Abteilung sämtliche der jeweiligen Abteilung zugeordneten Geräte, insbesondere als Gruppe, angesprochen werden.

Weiterer Gegenstand der Erfindung ist ein Computerprogramm mit Programmcode-Mitteln, um das erfindungsgemäße Verfahren durchzuführen, wenn das Programm auf einem Computer ausgeführt wird. Unter einem Computer wird dabei insbesondere auch jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen. Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogramm auf einem Computer ausgeführt wird. Bei dem Datenträger kann es sich insbesondere um nichtflüchtige Speicher in Form von entsprechenden Halbleiterbauelementen, CDs oder DVDs handeln.

## Patentansprüche

1. Verfahren betreffend den Betrieb von mit einer zentralen Stelle vernetzten selbständigen elektronischen Geräten eines Einzelhandelsunternehmens, nämlich Ladenwaagen, wobei an der zentralen Stelle eine die Einzelhandelsunternehmensstruktur repräsentierende Datenstruktur für ein Verwaltungsprogramm hinterlegt ist, die mehrere hierarchische Ebenen aufweist, in der die Geräte als Datenelemente erfasst sind und die mit einer Anwendungssoftware erzeugt wird, wobei die Geräte auf der Grundlage der Datenstruktur auch überwacht, konfiguriert und/oder angesteuert werden.

2. Verfahren nach Anspruch 1,
**dadurch gekennzeichnet,**
**dass** die Geräte in der untersten Ebene der Datenstruktur erfasst sind und/oder dass die Datenstruktur als Verzeichnisstruktur und/oder als Baumstruktur aufgebaut ist.

3. Verfahren nach Anspruch 1 oder 2,
**dadurch gekennzeichnet,**
**dass** die Anwendungssoftware ein Software-Strukturassistent ist.

4. Verfahren nach zumindest einem der vorstehenden Ansprüche,
**dadurch gekennzeichnet,**
**dass** beim Anlegen der Datenstruktur die Ebenen, insbesondere deren Art, Anzahl und/oder Verknüpfung untereinander, festgelegt werden und/oder dass nach Anlegen der Datenstruktur innerhalb einer Hierarchieebene Änderungen vorgenommen werden, insbesondere vorhandene Ebeneneinträge verändert und/oder gelöscht und/oder neue Ebeneneinträge hinzugenommen werden.

5. Verfahren nach zumindest einem der vorstehenden Ansprüche,
**dadurch gekennzeichnet,**
**dass** an der zentralen Stelle jedem Gerät ein Datensatz zugeordnet ist, der Softwaredaten, Hardwaredaten und/oder die Konfiguration des Geräts umfasst und/oder dass die Software der Geräte in Abhängigkeit von an der zentralen Stelle hinterlegten Softwaredaten der Geräte aktualisiert wird.

6. Verfahren nach zumindest einem der vorstehenden Ansprüche,
**dadurch gekennzeichnet,**
**dass** an der zentralen Stelle die Betriebszustände der Geräte überwacht werden und/oder dass von der zentralen Stelle aus eine Fernwartung der Geräte durchgeführt wird und/oder dass Betriebszustände der Geräte optisch dargestellt werden.

7. Verfahren nach zumindest einem der vorstehenden Ansprüche,
**dadurch gekennzeichnet,**
**dass** an der zentralen Stelle wenigstens ein Geräteprofil mit einer erstellten Gerätekonfiguration hinterlegt ist, wobei das Geräteprofil mit mehreren Geräten verknüpft ist, um die Konfiguration der verknüpften Geräte gemäß der erstellten Gerätekonfiguration einzustellen, und wobei bei Änderung der erstellten Gerätekonfiguration die Konfigurationen der verknüpften Geräte entsprechend geändert werden.

8. Verfahren nach Anspruch 7,
**dadurch gekennzeichnet,**
**dass** mehrere Geräteprofile mit voneinander verschiedenen erstellten Gerätekonfigurationen vorgesehen sind, wobei die erstellten Gerätekonfigurationen jeweils als Konfigurationsdatei ausgebildet sind, und wobei die Konfigurationsdateien voneinander verschieden sind, wobei insbesondere die Geräte basierend auf jeweils wenigstens einer Konfigurationsdatei betrieben werden, wobei die Konfigurationsdatei austauschbar ist.

9. Verfahren nach zumindest einem der vorstehenden Ansprüche,
**dadurch gekennzeichnet,**
**dass** an der zentralen Stelle wenigstens eine Standard-Konfiguration und/oder Standard-Software hinterlegt ist, wobei bei erstmaligem Anschluss eines Geräts an den Geräteverbund und/oder bei Wechsel der Bestimmung des Geräts das Gerät eine zugeordnete Standard-Konfiguration und/oder Standard-Software automatisch herunterlädt.

10. Verfahren nach zumindest einem der vorstehenden Ansprüche,
**dadurch gekennzeichnet,**
**dass** bei erstmaligem Anschluss eines Geräts an den Geräteverbund das Gerät in die Datenstruktur aufgenommen wird, wobei insbesondere zum Anschluss eines Geräts die geltende Datenstruktur von der zentralen Stelle an das anzuschließende Gerät übermittelt, an dem anzuschließenden Gerät die Einordnung des anzuschließenden Geräts in die Datenstruktur vorgenommen und die vorgenommene Einordnung der zentralen Stelle übermittelt wird.

11. Verfahren nach Anspruch 10,
**dadurch gekennzeichnet,**
**dass** von dem Verwaltungsprogramm überprüft wird, ob das anzuschließende Gerät zum Betrieb in einem Geräteverbund mit den vernetzten Geräten zugelassen ist.

12. Verfahren nach zumindest einem der vorstehenden Ansprüche,
**dadurch gekennzeichnet,**
**dass** bei der Konfiguration eines Geräts die Anzahl der auswählbaren Einstellungen gegenüber der Anzahl der grundsätzlich verfügbaren Einstellungen in Abhängigkeit von der Hardware des Geräts reduziert ist und/oder dass digitale Dateninhalte in Abhängigkeit von Knoten übergeordneter Ebenen der Datenstruktur, denen die Geräte zugeordnet sind, oder in Abhängigkeit von der Hardware der Geräte von der zentralen Stelle an die Geräte übermittelt werden.

13. Computerprogramm mit Programmcode-Mitteln, um das Verfahren nach einem der Ansprüche 1 bis 12 durchzuführen, wenn das Programm auf einem Computer ausgeführt wird.

14. Computerprogrammprodukt mit Programmcode-Mitteln, die auf einem computerlesbaren Datenträger gespeichert sind, um das Verfahren nach einem der Ansprüche 1 bis 12 durchzuführen, wenn das Computerprogramm auf einem Computer ausgeführt wird.

## Claims

1. A method relating to the operation of independent electronic devices of a retail company, namely store scales, networked with a central point, wherein a data structure for a management program is stored at the central point, which data structure represents the retail company structure, which data structure has a plurality of hierarchical levels, in which data structure the devices are recorded as data elements and which data structure is generated by an application software, and wherein the devices are also monitored, configured and/or controlled on the basis of the data structure.

2. A method in accordance with claim 1,
**characterized in that**
the devices are recorded in the lowest level of the data structure; and/or **in that** the data structure is designed as an index structure and/or as a tree structure.

3. A method in accordance with claim 1 or claim 2,
**characterized in that**
the application software is a software structure assistant.

4. A method in accordance with at least one of the preceding claims,
**characterized in that**
the levels, in particular their type, number and/or link to one another, are defined on the creation of the data structure; and/or **in that** changes are made within a hierarchical level after the creation of the data structure, with existing level entries in particular being changed and/or deleted and/or new level entries being added.

5. A method in accordance with at least one of the preceding claims,
**characterized in that**
a data set is associated with each device at the central point and comprises software data, hardware data and/or the configuration of the device; and/or **in that** the software of the devices is updated in dependence on software data of the devices stored at the central point.

6. A method in accordance with at least one of the preceding claims,
**characterized in that**
the operating states of the devices are monitored at the central point; and/or **in that** remote maintenance of the devices is carried out from the central point; and/or **in that** operating states of the devices are shown visually.

7. A method in accordance with at least one of the preceding claims,
**characterized in that**
at least one device profile having a prepared device configuration is stored at the central point, with the device profile being linked to a plurality of devices to set the configuration of the linked devices in accordance with the prepared device configuration, and with the configurations of the linked devices being changed accordingly on a change to the prepared device configuration.

8. A method in accordance with claim 7,
**characterized in that**
a plurality of device profiles having prepared device configurations different from one another are provided, with the prepared device configurations being respectively designed as configuration files, and with the configuration files being different from one another, with the devices in particular being operated based on a respective at least one configuration file, with the configuration file being exchangeable.

9. A method in accordance with at least one of the preceding claims,
**characterized in that**
at least one standard configuration and/or standard software is/are stored at the central point, with the device automatically downloading an associated standard configuration and/or standard software on the first-time connection of a device to the device network and/or on a change of the purpose of the device.

10. A method in accordance with at least one of the preceding claims,
**characterized in that**
the device is included in the data structure on the first-time connection of a device to the device network, with, in particular, for the connection of a device, the existing data structure being transmitted from the central point to the device to be connected, with the classification of the device to be connected into the data structure being performed at the device to be connected and the performed classification being transmitted to the central point.

11. A method in accordance with claim 10,
**characterized in that**
a check is made by the management program whether the device to be connected is approved for operation in a device network comprising the networked devices.

12. A method in accordance with at least one of the preceding claims,
**characterized in that**,
in the configuration of a device, the number of selectable settings is reduced with respect to the number of generally available settings in dependence on the hardware of the device; and/or **in that** digital data content is transmitted from the central point to the devices in dependence on nodes of higher-ranking levels of the data structure with which the devices are associated or in dependence on the hardware of the devices.

13. A computer program having program code means to carry out the method in accordance with any one of the claims 1 to 12 when the program is executed on a computer.

14. A computer program product having program code means which are stored on a computer readable data carrier to carry out the method in accordance with any one of the claims 1 to 12 when the computer program is executed on a computer.

## Revendications

1. Procédé relatif au fonctionnement d'appareils électroniques autonomes d'un établissement de vente au détail, à savoir de balances de magasin, mis en réseau avec un poste central,
dans lequel
une structure de données, représentant la structure de l'établissement de vente au détail, pour un programme de gestion est stockée auprès du poste central, et ladite structure présente plusieurs niveaux hiérarchiques, dans laquelle les appareils sont enregistrés en tant qu'éléments de données, et laquelle est générée avec un logiciel d'application, les appareils étant également surveillés, configurés et/ou pilotés sur la base de la structure de données.

2. Procédé selon la revendication 1,
**caractérisé en ce que**
les appareils sont enregistrés dans le niveau le plus bas de la structure de données, et/ou **en ce que**
la structure de données est conçue sous forme de structure de répertoire et/ou sous forme de structure arborescente.

3. Procédé selon la revendication 1 ou 2,
**caractérisé en ce que**
le logiciel d'application est un assistant de structure de logiciel.

4. Procédé selon l'une au moins des revendications précédentes,
**caractérisé en ce que**
lors de la création de la structure de données, on fixe les niveaux, en particulier leur type, leur nombre et/ou leur association mutuelle, et/ou **en ce que** après création de la structure de données, on procède à des modifications au sein d'un niveau hiérarchique, en particulier on modifie et/ou on efface des inscriptions existantes dans ledit niveau et/ou on ajoute de nouvelles inscriptions dans ledit niveau.

5. Procédé selon l'une au moins des revendications précédentes,
**caractérisé en ce que**
dans le poste central, un ensemble de données est attribué à chaque appareil, qui contient des données de logiciel, des données de matériel et/ou la configuration de l'appareil, et/ou **en ce que**
le logiciel des appareils est mis à jour en fonction des données de logiciel des appareils stockées dans le poste central.

6. Procédé selon l'une au moins des revendications précédentes,
**caractérisé en ce que**
dans le poste central, les états de fonctionnement des appareils sont surveillés, et/ou **en ce que**
une télémaintenance des appareils est effectuée à partir du poste central, et/ou **en ce que**
des états de fonctionnement des appareils sont représentés par voie optique.

7. Procédé selon l'une au moins des revendications précédentes,
**caractérisé en ce que**
au moins un profil d'appareil ayant une configuration d'appareil créée est stocké dans le poste central, le profil d'appareil étant associé à plusieurs appareils pour régler la configuration des appareils associés selon la configuration d'appareil créée, et lors d'une modification de la configuration d'appareil créée, les configurations des appareils associés sont modifiées en correspondance.

8. Procédé selon la revendication 7,
**caractérisé en ce que**
il est prévu plusieurs profils d'appareil ayant des configurations d'appareil créées différentes les unes des autres, les configurations d'appareil créées étant réalisées chacune sous forme de fichier de configuration, et les fichiers de configuration diffèrent les uns des autres, en particulier les appareils fonctionnent chacun à la base d'au moins un fichier de configuration respectif, le fichier de configuration étant interchangeable.

9. Procédé selon l'une au moins des revendications précédentes,
**caractérisé en ce que**
au moins une configuration standard et/ou un logiciel standard est stocké(e) dans le poste central, et lorsqu'un appareil est branché pour la première fois à l'association d'appareils et/ou lorsque la détermination de l'appareil est modifiée, l'appareil télécharge automatiquement une configuration standard attribué et/ou un logiciel standard attribué.

10. Procédé selon l'une au moins des revendications précédentes,
**caractérisé en ce que**
lorsqu'un appareil est branché pour la première fois à l'association d'appareils, l'appareil est reçu dans la structure de données, et en particulier, pour brancher un appareil, la structure de données valide est communiquée du poste central à l'appareil à brancher, le classement de l'appareil à brancher dans la structure de données est effectué au niveau de l'appareil à brancher, et le classement effectué est communiqué au poste central.

11. Procédé selon la revendication 10,
**caractérisé en ce que**
le programme de gestion vérifie si l'appareil à brancher est autorisé au fonctionnement dans une association d'appareils avec les appareils mis en réseau.

12. Procédé selon l'une au moins des revendications précédentes,
**caractérisé en ce que**
lors de la configuration d'un appareil, le nombre des réglages sélectionnables est réduit par rapport au nombre des réglages fondamentalement disponibles en fonction du matériel de l'appareil, et/ou **en ce que** des contenus de données numériques sont communiqués du poste central aux appareils en fonction des noeuds de niveaux supérieurs de la structure de données auxquels les appareils sont attribués, ou bien en fonction du matériel des appareils.

13. Programme informatique ayant des moyens de code de programme pour mettre en oeuvre le procédé selon l'une des revendications 1 à 12 lorsque le programme est exécuté sur un ordinateur.

14. Produit de programme informatique ayant des moyens de code de programme stockés sur un support de données lisible par ordinateur pour mettre en oeuvre le procédé selon l'une des revendications 1 à 12 lorsque le programme informatique est exécuté sur un ordinateur.
